# EUROPÄISCHE PATENTSCHRIFT

(11) **EP 3 601 423 B1**
(45) Veröffentlichungstag und Bekanntmachung des Hinweises auf die Patenterteilung: **05.08.2026**
(21) Anmeldenummer: 18714225.2
(22) Anmeldetag: 26.03.2018
(51) Int. Cl.: C08K 3/32

(54) **VERWENDUNG VON KRISTALLWASSERFREIEN FE(II)-VERBINDUNGEN ALS STRAHLUNGSABSORBER**
USE OF FE(II) COMPOUNDS WHICH ARE FREE FROM WATER OF CRYSTALLISATION AS RADIATION ABSORBER
UTILISATION DE COMPOSÉS DE FE(II) ANHYDRES SOUS FORME D'ABSORBEUR DE RAYONNEMENT

(30) Priorität: 30.03.2017 DE 102017106911
(43) Veröffentlichungstag der Anmeldung: 05.02.2020
(73) Patentinhaber: Chemische Fabrik Budenheim KG, 55257 Budenheim (DE)
(72) Erfinder: WISSEMBORSKI, Rüdiger, 16816 Neuruppin (DE); LITTERSCHEID, Christian, 55270 Ober-Olm (DE); SCHNEE, Rainer, 55130 Mainz (DE); WELSCH-PAPENBREER, Franziska, 55425 Waldalgesheim (DE); ADOLF, Joachim, 55131 Mainz (DE)
(74) Vertreter: WSL Patentanwälte Partnerschaft mbB
(86) Internationale Anmeldenummer: PCT/EP2018/057659
(87) Internationale Veröffentlichungsnummer: WO 2018/178020

(56) Entgegenhaltungen:
- EP-A1- 3 176 792
- WO-A1-2015/067545
- WO-A1-2016/064192
- DE-A1- 102013 100 583
- US-A1- 2008 241 492
- SITZIA RITA: "Infrared spectra of some natural phosphates", RENDICONTI DEL SEMINARIO DELLA FACOLTA DI SCIENZE DELL'UNIVERSITA DI CAGLIARI, vol. 36, no. 1-2, 1 January 1966 (1966-01-01), pages 105 - 115, XP009505176

## Beschreibung

### GEGENSTAND DER ERFINDUNG

Die vorliegende Erfindung betrifft neue Verwendungen von kristallwasserfreiem Eisen(II)-Orthophosphat der allgemeinen Formel Fe₃(PO₄)₂ und kristallwasserfreiem Eisen(II)-Metall-Orthophosphat, Eisen(II)-Metall-Phosphonat, Eisen(II)-Metall-Pyrophosphat oder Eisen(II)-Metall-Metaphosphat der allgemeinen Formel FeₐMet_{b}(PO_{c})_{d} oder Gemischen der vorgenannten.

### HINTERGRUND DER ERFINDUNG

Aus der Literatur ist eine Vielzahl von verschiedenen organischen und anorganischen Absorbern für Strahlung im nahen Infrarotbereich (NIR) des elektromagnetischen Spektrums, d. h. im Wellenlängenbereich von etwa 780 nm bis 1400 nm, und Anwendungsmöglichkeiten für solche Absorber bekannt. Trotz ihrer weiten Verbreitung ist die Verwendung organischer NIR-Absorber mit einigen Nachteilen verbunden. Beispielsweise erfordert der Einsatz sogenannter Leucofarbstoffe den Zusatz von thermischen Säure-Generatoren (TAG). Diese Verbindungen setzen unter Wärme- und oder Lasereinwirkung Protonen frei, wodurch eine Farbänderung des Leucofarbstoffs induziert wird. Typische Vertreter solcher TAG-Verbindungen sind AmmoniumSalze von organischen Silizium- oder Borverbindungen oder Benzylhydroxybenzoat. Weiterhin weisen organische NIR-Absorber oftmals eine Absorption im Bereich des sichtbaren Lichts und damit eine Eigenfärbung auf, die in einigen Anwendungen unerwünscht ist. Darüber hinaus handelt es sich bei organischen NIR-Absorbern meist um komplexe, synthetisch schwer zugängliche Verbindungen, deren Herstellung aufwändig und deren Einsatz mit ökologischen und toxikologischen Bedenken verbunden ist. Auch die vergleichsweise geringe thermische Stabilität der organischen Verbindungen ist ein Nachteil dieser NIR-Absorber und schränkt deren Anwendungsbreite stark ein.

Es gibt daher seit langem Bestrebungen, organische Verbindungen durch einfache und stabile Verbindungen zu ersetzen. Ein sehr einfach und kostengünstig erhältlicher, starker Absorber ist beispielsweise Ruß. Die Verwendung von Ruß ist jedoch ebenfalls mit einigen Nachteilen verbunden. Der größte Nachteil von Ruß ist sicherlich dessen unspezifische Absorption über einen sehr breiten Bereich des elektromagnetischen Spektrums, insbesondere die Absorption im sichtbaren Bereich, die zu seiner schwarzen Eigenfarbe, aber dadurch auch zur einer ungewünschten Grau- oder Schwarzfärbung des Trägermaterials, in das der Absorber eingearbeitet wird, führt.

Alternativ bietet sich daher der Einsatz von verschiedenen anorganischen Metalloxiden, Mineralien und Komplexverbindungen als NIR-Absorber an. Diese besitzen in der Regel eine gute Temperaturbeständigkeit und sind zumeist einfach und kostengünstig herstellbar.

WO 2012/055742 A2 betrifft ein Streckblasverfahren für thermoplastische Kunststoffe, das die Verwendung von IR-Strahlung absorbierenden Verbindungen umfasst. In diesem Verfahren wird durch Spritzguss ein Vorformling aus einer Polyolefinzusammensetzung hergestellt, der als IR-Absorber Phosphate, kondensierte Phosphate oder Hydroxidphosphate von Kupfer, Calcium, Zinn oder Eisen enthält. Anschließend wird der Vorformling mittels IR-Strahlung erhitzt und im Streckblasverfahren umgeformt. In den Beispielen wird Kupferhydroxidphosphat, Cu₂(OH)PO₄, als IR-Absorber genannt. Die Verwendung dieses Absorbers soll für eine Verbesserung der Wanddickenverteilung des Verfahrensproduktes sorgen.

WO 2005/052049 betrifft thermoplastische Polymere, die IR-Absorber der allgemeinen Formel Meₓ(PO₄)_{y}(OH)_{z} enthalten, wobei Me aus einem oder mehreren Elementen der Gruppe Cu, Fe, Mn, Sb, Zn, Ti, Ni, Co, V, Mg, Bi, Be, Al, Ce, Ba, Sr, Na, K, Ge, Ga, Ca, Cr, In oder Sn bestehen soll und x = 1-18, y = 1-12 und z = 0,2-10 sein kann. Die einzigen ausdrücklich genannten und bevorzugten Absorber sind jedoch nur monometallische oder gemischtmetallische Kupfer-Phosphat-Verbindungen, und die Ausführungsbeispiele betreffen wie die WO 2012/055742 A2 ausschließlich Kupferhydroxidphosphat, Cu₂(OH)PO₄.

DE 39 17 294 A1 offenbart laserbeschriftbare Polymere, die einen Zuschlagsstoff als Absorber enthalten, der im sichtbaren Spektralbereich von 400 nm bis 750 nm keine oder nur eine geringe Eigenfarbe haben soll und durch Einwirkung von Laserlicht im IR-Spektralbereich oberhalb von 900 nm und/oder im UV-Spektralbereich unterhalb von 400 nm eine Markierung mit großem Farbkontrast erzeugen soll. Als absorbierende Zuschlagsstoffe offenbart die DE 39 17 294 A1 Molybdän(VI)-Oxid (MoO₃) und Kupferhydroxidphosphat, wobei letzteres wiederum ganz besonders geeignet sein soll. Als weitere Zuschlagstoffe werden Titandioxid, Titangelb und rotes Eisenoxid genannt, jedoch zu dem Zweck, dem Polymer und damit der darauf aufgebrachten Beschriftung eine der Eigenfärbung dieser Stoffe entsprechend weiße, gelbe bzw. rote Hintergrundfärbung zu verleihen.

Kupferhydroxidphosphat ist auch aus vielen anderen Dokumenten aus dem Stand der Technik als hervorragender IR-Strahlungsabsorber ohne signifikante Eigenfärbung bekannt, weshalb es schon seit vielen Jahren in verschiedensten Anwendungen als Strahlungsabsorber eingesetzt wird. Beispiele sind das oben genannte Aufheizen eines Polymers im Streckblasformverfahren, das Laserbeschriften, aber auch das Laserschweißen von thermoplastischen Kunststoffen sowie andere Anwendungen, bei denen ein mehr oder weniger transparentes Polymer IR-Strahlung und/oder UV-Strahlung absorbieren und dabei je nach Anwendung gegebenenfalls eine mehr oder weniger starke Erwärmung des Trägermaterials bewirken soll. Bislang sind kaum Absorber bekannt, die an die außergewöhnlichen Eigenschaften von Kupferhydroxidphosphat hinsichtlich Absorptionsvermögen bei gleichzeitig hoher thermischer und chemischer Stabilität sowie fehlender Eigenfärbung heranreichen. Kupferhydroxidphosphat zeigt eine starke Absorption im Wellenlängenbereich von etwa 800 - 1600 nm.

Ein Nachteil des als hervorragender Absorber bekannten Kupferhydroxidphosphats, wie auch anderer Kupfer-Phosphat-Verbindungen, liegt in den verhältnismäßig hohen Herstellungskosten. Hinzu kommt, dass Kupfer aus Gründen des Gewässerschutzes möglichst nicht ins Abwasser gelangen sollte bzw. daraus mit hohen Aufwand entfernt werden muss, weshalb die Vermeidung von Kupferverbindungen in vielen Anwendungen angestrebt wird.

EP 3 176 792 A1 offenbart eine Zusammensetzung für die Herstellung einer leitfähigen Struktur auf einem Trägermaterial, das ein Polymerharz, einschließlich Polycarbonatharz, und ein anorganisches Additiv, welches elektromagnetische Strahlung im IR-Bereich absorbiert.

US 2008/241492 A1 offenbart eine Tinte für einen Stahlstichdruckprozess, wobei die Tinte einen polymeren organischen Binder und ein infrarotabsorbierendes Material aufweist, welches eine Verbindung eines Übergangsmetallelementes enthält, welches unter Ti, V, Cr, Mn, Fe, Co, Ni und Cu ausgewählt sein kann. Als Anionen der Verbindung werden neben Phosphaten auch Silikat, kondensierte Polysilikate, Titanat, kondensierte Polytitatanate, Vanadat, kondensierte Polyvanadate, Molybdat, kondensierte Polymolybdate, Wolframat, kondensierte Polywolframate, Fluoride, Oxide und Hydroxide angeführt. Die Verbindungen von Übergangsmetallelementen können weiterhin Alkali- oder Erdalkalimetalle enthalten.

WO 2015/067545 betrifft gemischtmetallische Phosphatverbindungen, welche als Hauptmetall Kupfer in zweiwertiger Oxidationsstufe in einem Anteil von wenigstens 70 At.-% und ein oder mehrere Dotierungsmetalle in einem Gesamtanteil der Dotierungsmetalle von wenigstens 0,01 bis höchstens 30,0 At.-% enthalten.

### AUFGABE

Die Aufgabe der vorliegenden Erfindung bestand daher darin, Absorber für verschiedene Verwendungen bereitzustellen, welche gegenüber dem Stand der Technik Vorteile besitzen und ähnlich gut oder gegebenenfalls sogar besser als bekannte Absorber dazu geeignet sind, NIR-Strahlung zu absorbieren, gleichzeitig hohe thermische und chemische Stabilität aufweisen, keine oder nur geringe Eigenfärbung besitzen und toxikologisch und ökologisch weniger bedenklich sind.

### BESCHREIBUNGS DER ERFINDUNG

Diese Aufgabe wird erfindungsgemäß gelöst durch die Verwendung von
- kristallwasserfreiem Eisen(II)-Orthophosphat der allgemeinen Formel Fe₃(PO₄)₂ oder
- kristallwasserfreiem Eisen(II)-Metall-Orthophosphat, Eisen(II)-Metall-Phosphonat, Eisen(II)-Metall-Pyrophosphat oder Eisen(II)-Metall-Metaphosphat der allgemeinen Formel FeₐMet_{b}(PO_{c})_{d}, worin a eine Zahl von 1 bis 5 ist, b eine Zahl von >0 bis 5 ist, c eine Zahl von 2,5 bis 5 ist, d eine Zahl von 0,5 bis 3 ist und wobei Met ein oder mehrere Metalle repräsentiert, ausgewählt aus der Gruppe, bestehend aus K, Mg, Ca, Sr, Ba, Sc, Y, La, Ti, Zr, Hf, Nb, Ta, Mo, W, Mn, Cu, Zn, Ni, B, Al, Ga, In, Si, Sn, Sb, Bi, und den Lanthanoiden, oder Kombinationen der vorgenannten Phosphate.

als Absorber für elektromagnetische Strahlung, wobei der Absorber in einem Trägermaterial fein verteilt oder gelöst wird und
das Trägermaterial aus der Gruppe ausgewählt ist, bestehend aus thermoplastischen und duroplastischen Polymeren, oxidischen Keramiken, nicht-oxidischen Keramiken, Gläsern, Schmelzklebstoffen, Farben, Lacken, Silikonen, Pappen, Papieren, Pulpen und Cellulosen, wobei der Absorber in dem Trägermaterial in einer Konzentration von 100 ppm bis 20 Gew.-% fein verteilt oder gelöst vorliegt, bezogen auf das Gesamtgewicht des Trägermaterials mit gegebenenfalls enthaltenen Zuschlagstoffen einschließlich des Absorbers.

Es wurde überraschend gefunden, dass erfindungsgemäßes kristallwasserfreies monometallisches Eisen(II)-Orthophosphat und auch erfindungsgemäße kristallwasserfreie gemischtmetallische Eisen(II)-Metall-Phosphate, Eisen(II)-Metall-Phosphonate, Eisen(II)-Metall-Pyrophosphate und Eisen(II)-Metall-Metaphosphate der allgemeinen Formel FeₐMet_{b}(PO_{c})_{d} sehr gute Absorptionseigenschaften im NIR-Bereich des elektromagnetischen Spektrums besitzen und gleichzeitig ähnlich dem Kupferhydroxidphosphat nur geringe Absorption im sichtbaren Wellenlängenbereich von 380 - 780 nm aufweisen und damit selbst kaum eine Eigenfärbung haben.

In einer Ausführungsform der Erfindung ist der Absorber kristallwasserfreies Eisen(II)-Orthophosphat der allgemeinen Formel Fe₃(PO₄)₂ und weist die Graftonit-Kristallstruktur auf.

Von kristallwasserfreiem Fe₃(PO₄)₂ sind auch andere Kristallstrukturen bekannt, beispielsweise die Sarcopsid-Kristallstruktur, welche zur Olivin-analogen Struktur von Ni₃(PO₄)₂ isotyp ist. Dem gegenüber hat sich das kristallwasserfreie Fe₃(PO₄)₂ in der Graftonit-Kristallstruktur als besonders vorteilhafter Absorber mit einer sehr hohen Absorption im Wellenlängenbereich von etwa 800 - 1250nm, besser noch im Wellenlängenbereich von 900 - 1100 nm und mit einem Absorptionsmaximum bei etwa 1000 nm erwiesen.

Demgegenüber ist die Absorption von Fe₃(PO₄)₂ mit der Sarcopsid-Kristallstruktur über den Wellenlängenbereich von 800 - 1250 nm im Vergleich zu kristallwasserfreiem Fe₃(PO₄)₂ in der Graftonit-Kristallstruktur gering.

Ohne sich an eine Theorie zu binden, nehmen die Erfinder an, dass die vorteilhaften Absorptionseigenschaften der erfindungsgemäßen Fe(II)-Verbindungen nicht alleine auf die Gegenwart des zweiwertigen Eisens und der Phosphat-Anionen bzw. Phosphonat-Anionen zurückzuführen ist, sondern auch auf die Abwesenheit von Kristallwasser. Zudem hat sich überraschend gezeigt, dass bestimmte Kristallstrukturen gegenüber anderen Kristallstrukturen vorteilhaft sind, insbesondere die Graftonit-Kristallstruktur des kristallwasserfreien Eisen(II)-Orthophosphats gegenüber der für Eisen(II)-Orthophosphat ebenfalls bekannten Sarcopsid-Kristallstruktur. Es sind auch kristallwasserhaltige Eisen(II)-Orthophosphate bekannt, beispielsweise das Oktahydrat Vivianit Fe₃(PO₄)₂ 8H₂O, nach dem auch die entsprechende Vivianit-Kristallstruktur benannt ist. Dieses weist jedoch nicht die erfindungsgemäß vorteilhaften Absorptionseigenschaften auf. Auch Eisen(III)-Orthophosphat besitzt nicht die vorteilhaften Absorptionseigenschaften des erfindungsgemäßen kristallwasserfreien Eisen(II)-Orthophosphats mit Graftonit-Kristallstruktur.

Die Graftonit-Kristallstruktur des erfindungsgemäßen kristallwasserfreien Eisen(II)-Orthophosphats der Formel Fe₃(PO₄)₂ ist nach dem Mineral Graftonit, (Fe,Mn,Ca,Mg)₃(PO₄)₂ benannt. Das Kristallsystem ist monoklin, die Raumgruppe ist *P2₁*/*c*, und die Gitterkonstanten sind etwa a ≈ 8.81 Å, b ≈ 11.56 Å, c ≈ 6,14 Å, α ≈ 90,00°, β ≈ 99,35°, γ ≈ 90.00°. Die Elementarzelle enthält 8 Formeleinheiten Fe_{1.5}PO₄. Der Phosphor ist darin tetraedrisch von Sauerstoff koordiniert, und Eisen(II) kommt auf 3 unterschiedlichen 4-zähligen Lagen (4e) mit jeweils unterschiedlichen Koordinationsgeometrien vor: 1x verzerrt oktaedrisch, wobei eines der koordinierten Sauerstoff-Ionen deutlich weiter entfernt ist (d ~ 2.68 Å), und 2x trigonal bipyramidal. Im Graftonit-System sind die Eisenatome somit ohne Inversionszentrum koordiniert. Die starke Abweichung von einer dichtesten Packung der Anionen rührt vermutlich von der Optimierung koordinativer Bedürfnisse.

Die sehr gute Absorption des kristallwasserfreien Eisen(II)-Orthophosphats in der Graftonit-Kristallstruktur im NIR-Bereich und die hervorragende Eignung als Absorber in verschiedensten Anwendungen, wie sie hierin beschrieben werden, war überraschend. Ohne sich an eine Theorie zu binden, erklären sich die Erfinder die guten Absorptionseigenschaften wie folgt.

Die Absorption elektromagnetischer Strahlung durch Übergangsmetallkomplexe wird u.a. durch Elektronenübergänge innerhalb der d-Schale hervorgerufen. Die Absorptionswahrscheinlichkeit dieser Übergänge ist stark abhängig von der Struktur der Übergangsmetallkomplexe. Da elektronische Übergänge gleicher Orbitalparität in zentrosymmetrischen Molekülen verboten sind (Laporte-Verbot), ist deren Absorption entsprechend gering, wie beispielsweise beim Eisen(III)-Orthophosphats, FePO₄, bei dem das Eisen oktaedrisch koordiniert ist.

Besitzt das Molekül jedoch kein Inversionszentrum, wie es bei dem erfindungsgemäßen kristallwasserfreien Eisen(II)-Orthophosphat mit Graftonit-Kristallstruktur, aber auch bei erfindungsgemäßen gemischtmetallischen Eisen(II)-Verbindungen der allgemeinen Formel FeₐMet_{b}(PO_{c})_{d} der Fall ist, ist das Laporte-Verbot aufgehoben und die Absorption dementsprechend stärker. Bei den erfindungsgemäßen Absorbern handelt es sich daher um Übergangsmetallkomplexe des Eisens, die eine Kristallstruktur aufweisen, bei der der Komplex kein Inversionszentrum in Bezug auf das Zentralatom aufweist.

Diese Koordination ist überraschenderweise vorteilhaft im Vergleich zu den Kristallstrukturen von beispielsweise Vivianit, Fe₃(PO₄)_{2*}8 H₂O, oder kristallwasserfreiem Eisen(II)-Orthophosphat, Fe₃(PO₄)₂, in der Sarcopsid-Kristallstruktur, welche eine oktaedrische Koordination mit Inversionszentrum in Bezug zum Eisenzentralatom aufweisen. Dadurch ist offensichtlich die Absorption insbesondere im NIR-Bereich entsprechend geringer als bei den erfindungsgemäßen Verbindungen.

Entsprechende Überlegungen gelten auch für die erfindungsgemäßen kristallwasserfreien Eisen(II)-Metall-Orthophosphate, -Phosphonate, -Pyrophosphate und -Metaphosphate der allgemeinen Formel FeₐMet_{b}(PO_{c})_{d}, soweit diese eine Eisenkoordination ohne Inversionszentrum aufweisen.

Erfindungsgemäß bevorzugte kristallwasserfreie Eisen(II)-Metall-Phosphate sind die Verbindungen SrFeP₂O₇, BaFeP₂O₇, KFePO₄, K(Fe_{0,75}Zn_{0,25})PO₄ und K(Fe_{0,75}Mg_{0,25})PO₄. Beispielsweise weisen SrFeP₂O₇ und BaFeP₂O₇ eine durch trigonale Bipyramiden bzw. durch quadratische Pyramiden definierte Struktur und gleichzeitig eine sehr starke Absorption im NIR-Bereich bei Wellenlängen von etwa 800 - 1150 nm und von etwa 1800 - 2500 nm auf.

Auch erfindungsgemäße Verbindungen mit tetraedrischer Koordination der Eisen(II)-Atome weisen kein Inversionszentrum auf und zeigen eine stark ausgeprägte Absorption im NIR-Bereich. Erfindungsgemäß bevorzugt sind daher auch Eisen(II)-Metall-Orthophosphate, Eisen(II)-Metall-Phosphonate, Eisen(II)-Metall-Pyrophosphate und Eisen(II)-Metall-Metaphosphate mit tetraedrischer Koordination. Darunter besonders bevorzugt sind kristallwasserfreies KFePO₄, K(Fe_{0,75}Zn_{0,25})PO₄ und K(Fe_{0,75}Mg_{0,25})PO₄. Bei diesen kristallwasserfreien Eisen(II)-Metall-Phosphaten ist die Absorption im NIR-Bereich besonders stark ausgeprägt und erstreckt sich nahezu gleichförmig über den gesamten IR-Bereich von etwa 780 nm bis 2500 nm und darüber hinaus. Vorteilhaft ist deren Verwendung insbesondere in Anwendungsgebieten, bei denen die breite Absorption über den gesamten IR-Bereich gewünscht ist, wie beispielsweise in Verpackungsmaterialien, welche die verpackten Produkte, beispielsweise Lebensmittel, vor IR-Strahlung schützen sollen.

Der Absorber liegt in dem Trägermaterial in der Regel fein verteilt vor. Abhängig vom Trägermaterial und dem Absorber kann er auch vollständig oder teilweise gelöst in dem Trägermaterial vorliegen.

Gemäß der Erfindung liegt der Absorber in dem Trägermaterial in einer Konzentration von 100 ppm bis 20 Gew.-% fein verteilt oder gelöst vor, vorzugsweise in einer Konzentration von 100 ppm bis 5 Gew.-%, bezogen auf das Gesamtgewicht des Trägermaterials mit gegebenenfalls enthaltenen Zuschlagstoffen einschließlich des Absorbers. Das Gesamtgewicht des Trägermaterials bezieht sich im Sinne der vorliegenden Erfindung immer auf die Summe der Masse des Trägermaterials und der Masse der zugesetzten Stoffe. Bei einem zu geringen Anteil an Absorber kann der Absorptionseffekt für die beabsichtigte Anwendung zu gering sein. Ein zu hoher Anteil an Absorbers kann hingegen zu einer Beeinträchtigung der Materialeigenschaften des Trägermaterials führen. Die für die jeweilige Anwendung geeignete und gewünschte Auswahl des Trägermaterials, des erfindungsgemäßen Absorbers sowie der erforderlichen bzw. geeigneten Menge an Absorber kann der Fachmann in Kenntnis der Erfindung aufgrund seines Fachwissens und unter Berücksichtigung der hierin nachfolgend angegebenen Beispiele einfach ermitteln.

Die Verbindungen der vorliegenden Erfindung bieten im Vergleich zu anderen Absorbern eine Vielzahl von Vorteilen. Sie sind relativ einfach und zu vergleichsweise niedrigen Kosten herstellbar und zeichnen sich beispielsweise gegenüber organischen oder metallorganischen Absorbern durch hohe Stabilität aus. Sie sind kristallwasserfrei, wodurch der gesamte Anteil an Strahlung von dem eigentlichen Komplex und nicht teilweise vom Kristallwasser absorbiert wird. Des Weiteren besitzen sie eine besonders hohe Absorption im NIR-Bereich, während sie nur eine schwache Absorption im sichtbaren Bereich der elektromagnetischen Strahlung aufweisen, wodurch sie keine oder nur eine geringe Eigenfärbung besitzen und die Farbe des Trägermaterials nicht wesentlich beeinflussen, der Komplex aber sehr einfach durch NIR Strahlung aktiviert werden kann.

Verbindungen mit einem Absorptionsmaximum im Wellenlängenbereich der kurzwelligen NIR-Strahlung (IR-A) von etwa 780 - 1450 nm haben den Vorteil, dass in diesem IR-Bereich eine höhere Energiemenge als durch die Absorption von langwelliger NIR-Strahlung (IR-B) von etwa 1450 - 3000 nm aufgenommen werden und damit in entsprechenden Anwendungen beispielsweise eine stärkere Aufheizung des Trägermaterials erreicht werden kann.

Besonders vorteilhafte erfindungsgemäße Verbindungen sind solche NIR-Absorber, die eine schwache Absorption im sichtbaren Bereich und eine starke Absorption im kurzwelligen NIR-Bereich des elektromagnetischen Spektrums zeigen. Zweckmäßigerweise beträgt das Verhältnis der maximalen Absorption der elektromagnetischen Strahlung im Wellenlängenbereich der kurzwelligen NIR-Strahlung (IR-A) von 780 - 1450 nm zur maximalen Absorption der elektromagnetischen Strahlung im sichtbaren Wellenlängenbereich von 380 - 780 nm (VIS) mindestens 1,3, bevorzugt mindestens 1,6, besonders bevorzugt mindestens 1,8.

In Verwendungen gemäß der vorliegenden Erfindung kann es vorteilhaft sein, als Quelle für die Bestrahlung des Trägermaterials, in dem der Absorber fein verteilt oder gelöst enthalten ist, Laserlicht einzusetzen, vorzugsweise Laserlicht mit einer Wellenlänge im Bereich von 780 nm bis 1500 nm, besonders bevorzugt im Bereich von 900 nm bis 1200 nm. Geeignet ist der Einsatz sogenannter Excimer-Laser, wie sie aus der Photolithographie bekannt sind. Besonders geeignete Excimer-Laser sind ArF-, KrF-, XeCl-, XeF- und KrCl-Laser. Vorteilhaft ist auch der Einsatz von Nd:YAG-Lasern, wie sie aus der Medizintechnik bekannt sind, wobei vorzugsweise solche mit einer Wellenlänge von 1064 nm oder 946 nm, d. h. im NIR-Bereich, verwendet werden. Laserlicht ist besonders geeignet, scharfe Konturen der Bestrahlung und einen lokal eng begrenzten hohen Energieeintrag zu erzielen, wo dies erwünscht oder erforderlich ist. Erfindungsgemäße Verwendungen, bei denen Laserlicht zur Bestrahlung des Trägermaterials besonders vorteilhaft ist, sind beispielsweise Laserschweißen, Laserbeschriftung und die Erzeugung von elektrisch leitenden Metallstrukturen, vorzugsweise von Leiterbahnstrukturen auf einem nichtleitenden Trägermaterial (LDS-Verfahren).

Ein Trägermaterial im Sinne der Erfindung kann jedes organische oder anorganische Material sein, das den Absorber der erfindungsgemäßen Verwendung feinverteilt oder gelöst enthalten kann. Vorzugsweise ist der Absorber im Trägermaterial gleichmäßig verteilt, denn eine solche gleichmäßige Verteilung ist mit Hilfe gängiger Verarbeitungsverfahren wie Extrusion sehr leicht realisierbar. Alternativ besteht die Möglichkeit, dass der Absorber in bestimmten Bereichen des Trägermaterials höher konzentriert ist als in anderen Bereichen. Der Absorber kann im Trägermaterial oder in einem Abschnitt des Trägermaterials auch mit einem Konzentrationsgefälle, das durch einen Konzentrationsgradienten charakterisiert ist, enthalten sein. Eine gezielte Anreicherung in einem Bereich kann zu verbesserten Materialeigenschaften sowie zu vorteilhaften Absorptionseigenschaften führen, beispielsweise wenn eine Absorption gezielt im oberflächennahen Bereich des Trägermaterials und weniger in tieferliegenden Bereichen erwünscht ist.

Das Trägermaterial ist erfindungsgemäß aus der Gruppe ausgewählt, bestehend aus thermoplastischen Polymeren, duroplastischen Polymeren, oxidischen Keramiken, nicht-oxidischen Keramiken, Gläsern, Schmelzklebstoffen, Farben, Lacken, Silikonen, Papieren, Pulpen, Pappen und Cellulosen.

Besonders bevorzugt ist das Trägermaterial ein thermoplastisches Polymer, welches aus der Gruppe ausgewählt ist, bestehend aus Polyvinylbutyral (PVB), Polypropylen (PP), Polyethylen (PE), Polyamid (PA), Polyester wie Polybutylenterephthalat (PBT), Polyethylenterephthalat (PET), Polyphenylenoxid, Polyacetal, Polymethacrylat, Polyoxymethylen, Polyvinylacetal, Polystyrol, Acryl-Butadien-Styrol (ABS), Acrylnitril-Styrol-Acrylester (ASA), Polycarbonat, Polyethersulfon, Polysulfonat, Polytetrafluoroethylen, Polyharnstoff, Formaldehydharze, Melaminharze, Polyetherketon, Polyvinylchlorid, Polylactid, Polysiloxan, Phenolharze, Epoxidharze, Poly(imid), Bismaleimid-Triazin, thermoplastischem Polyurethan, Copolymeren und/oder Mischungen der vorgenannten Polymere.

Thermoplastische Polymere sind in den meisten Fällen farblos, und ihre Farbe und/oder Transparenz wird durch den Zusatz des erfindungsgemäßen Absorbers nicht oder nur geringfügig beeinflusst, was in vielen Anwendungen besonders vorteilhaft ist. Die erfindungsgemäßen Absorber besitzen in der Regel eine lange Haltbarkeit und hohe Stabilität. Sie sind sehr temperaturbeständig, sodass selbst ein Compoundieren bzw. Spritzgießen in Verbindung mit Hochtemperaturkunststoffen, wie Polyaramiden oder Flüssigkristallpolymeren (LCPs) möglich ist.

In einer bevorzugten Ausführungsform der Erfindung weist der Absorber eine mittlere Korngröße (d50-Wert) im Bereich von 0,01 µm bis 50 µm, vorzugsweise von 0,1 bis 20 µm, besonders bevorzugt von 1 µm bis 10 µm auf. Zu geringe Korngrößen haben den Nachteil, dass sie zu Agglomeraten führen, die dann wiederum aufgebrochen werden müssen. Zu große Korngrößen haben den Nachteil, dass sie es z.B. unmöglich machen, dünne Folien oder sehr dünne Bauteile herzustellen. Durch das Einbringen von Partikeln kleiner Korngrößen werden die Materialeigenschaften weniger stark beeinflusst als durch große Korngrößen und es wird ein gleichmäßigeres Absorptionsverhalten erzielt und lokale Überhitzungen werden vermieden.

Zur Bestimmung der mittleren Korngrößen können vom Fachmann gängige Methoden wie Lichtstreuung oder mikroskopische Verfahren genutzt werden. Die hierin angegebenen erfindungsgemäßen mittleren Korngrößen wurden mit einem Laser-Teilchengrößenmessgerät (Modell LA-950V2 der Firma Horiba; Softwareversion 7.2) bestimmt.

Die erfindungsgemäßen Absorber sind im Vergleich zu vielen bekannten Absorbern besonders temperaturstabil. Im Zusammenhang mit der vorliegenden Erfindung bedeutet dies, dass keine signifikanten Umwandlungs-, Zersetzungs- oder Hydratationsprozesse in einem gewissen Temperaturbereich stattfinden. Zur Überprüfung der Temperaturstabilität des Absorbers wird eine Probe des Absorbers für 16 h einer definierten Temperatur ausgesetzt und nach der Temperaturbehandlung die Absorption einer definierten Menge des temperaturbehandelten Absorbers mit derjenigen des unbehandelten Absorbers bei einer bestimmten Wellenlänge bzw. innerhalb eines bestimmten Wellenlängenbereichs verglichen. Zweckmäßigerweise wird der Vergleich bei der Wellenlänge des Absorptionsmaximums des unbehandelten Absorbers durchgeführt. Als temperaturstabil wird ein Absorber angesehen, wenn die Absorption des temperaturbehandelten Absorbers >80%, vorzugsweise >90%, besonders bevorzugt >95% derjenigen des unbehandelten Absorbers beträgt.

Zweckmäßigerweise enthält das Trägermaterial bei den erfindungsgemäßen Verwendungen keine Zusätze, die unter Erwärmung bis 300°C, bevorzugt bis 400°C, besonders bevorzugt bis 500°C, und/oder unter Bestrahlung mit elektromagnetischer Strahlung durch Zerfall, chemische Umwandlung oder Reaktion mit einem Inhaltsstoff des Trägermaterials oder dem Trägermaterial selbst Gas freisetzen, zumindest nicht in wesentlichen Mengen, die geeignet sind, die Materialeigenschaften des Trägermaterials nachteilig zu beeinflussen. Durch sich bildendes und aufschäumendes Gas können die Materialeigenschaften des Trägermaterials verschlechtert werden. Der Anteil Gas freisetzender Zusätze zu dem Trägermaterial, sofern solche Zusätze überhaupt enthalten sind, liegt daher vorzugsweise unter 1 Gew.-% ist, bevorzugt unter 0,1 Gew.-%, besonders bevorzugt unter 0,01 Gew.-% der Gesamtmasse des Trägermaterials.

Die vorliegende Erfindung umfasst die Verwendung des erfindungsgemäßen Absorbers zur Herstellung von Produkten, welche aus dem Trägermaterial bestehen oder dieses umfassen, wobei das Trägermaterial den Absorber in einer Menge enthält, sodass es Infrarotstrahlung bei wenigstens einer Wellenlänge im Bereich von 780 nm bis 1400 nm stärker absorbiert als das gleiche Polymer ohne darin enthaltenen Absorber. Nachfolgend werden erfindungsgemäße Produkte näher beschrieben.
a) Erfindungsgemäß vorteilhaft ist die Verwendung des erfindungsgemäßen Absorbers zur Herstellung von Verpackungsmaterial für Handelsprodukte, wobei das Trägermaterial thermoplastisches Polymer oder duroplastisches Polymer ist, vorzugsweise transparentes thermoplastisches Polymer oder duroplastisches Polymer.

Durch den Einsatz von Absorbern in Verpackungsmaterial, können strahlungsempfindliche Handelsprodukte, wie beispielsweise Lebensmittel, aber auch Produkte, die bei länger anhaltender Bestrahlung beispielsweise ihre Farbe verändern, vor Strahlung und/oder Erwärmung durch Licht- oder Sonneneinstrahlung geschützt werden. Bei Lebensmitteln kann dadurch deren Haltbarkeit erheblich verlängert werden, ohne dass eingefärbte Verpackungsmaterialien verwendet werden müssen. Dem Verbraucher können so die Produkte durch das Verpackungsmaterial hindurch präsentiert werden bei gleichzeitigem Schutz der Produkte vor schädlicher Strahlung.

Weiterhin können durch das Zurückhalten von Strahlung auch Abbaureaktionen und Schädigungen des Verpackungsmaterials, insbesondere von thermoplastischen oder duroplastischen Kunststoffen, selbst verringert werden, wie beispielsweise Quervernetzungen, Versprödung, Ausbleichen oder Brüchigwerden des Materials.

Darüber hinaus sind die erfindungsgemäßen Verbindungen großenteils toxikologisch und ökologisch unbedenklich, weshalb sie sich im Vergleich zu vielen anderen NIR-Absorbern besonders für die Anwendung als Lebensmittelverpackungen oder zur Verpackung von beispielsweise Kinderspielzeug eignen. Sie geben keine gesundheitsgefährdenden oder geschmacksbeeinflussenden Stoffe ab und beeinträchtigen zudem nicht die Materialeigenschaften des Verpackungsmaterials.

In einer bevorzugten Ausführungsform dieser Verwendung ist der Absorber ein Eisen(II)-Metall-Orthophosphat, Eisen(II)-Metall-Phosphonat, Eisen(II)-Metall-Pyrophosphat oder Eisen(II)-Metall-Metaphosphat mit tetraedrischer Struktur, vorzugsweise KFePO₄, Fe(_{0,75}Zn_{0,25})PO₄ oder K(Fe_{0,75}Mg_{0,25})PO₄, da diese Absorber über einen sehr breiten, nahezu den gesamten Bereich des NIR-Spektrums, wie es beispielsweise in der Sonnenstrahlung enthalten ist, eine hohe Absorption aufweisen und somit das Produkt und/oder das Verpackungsmaterial schützen.

b) Erfindungsgemäß vorteilhaft ist auch die Verwendung des erfindungsgemäßen Absorbers zur Herstellung von Fensterscheiben, wobei das Trägermaterial zweckmäßigerweise transparentes thermoplastisches Polymer, transparentes duroplastisches Polymer oder Glas ist.

Beim Einsatz von Fensterscheiben, insbesondere solchen aus thermoplastischem Material, wie beispielsweise Polymethylmethacrylat oder Polycarbonat, kommt es bei Sonneneinwirkung regelmäßig zu einer Erwärmung im Inneren der Räume, die durch die Fensterscheiben abgeschlossen sind. Die Erwärmung entsteht durch die Absorption von NIR-Strahlung und Umwandlung in langwelligere Wärmestrahlung durch Bauteile hinter den Fensterscheiben, wenn die NIR-Strahlung diese ungehindert passieren kann. Da langwellige Wärmestrahlung nur in geringem Maße wieder nach außen abgestrahlt wird, entsteht ein "Treibhauseffekt". Um diesen möglichst gering zu halten, sollte die Transmission von NIR-Strahlung durch die Fensterscheiben entsprechend minimiert werden. Die meisten im Stand der Technik bekannten NIR-Absorber für Fensterscheiben basieren auf Seltenerd- oder Übergangsmetallverbindungen, die entweder eine Eigenfärbung aufweisen oder nur schwer und zu hohen Kosten erhältlich sind. Die erfindungsgemäßen Eisenverbindungen bieten die Möglichkeit, transparente Fensterscheiben auf einfache Weise und zu geringen Kosten herzustellen. Durch die Absorption der Strahlung wird eine Erwärmung hinter den Fensterscheiben durch eindringende Strahlung erheblich verringert.

In einer bevorzugten Ausführungsform dieser Verwendung ist der Absorber ein Eisen(II)-Metall-Phosphat, -Phosphonat, -Pyrophosphat oder -Metaphosphat mit tetraedrischer Struktur, vorzugsweise KFePO₄, Fe(_{0,75}Zn_{0,25})PO₄ oder K(Fe_{0,75}Mg_{0,25})PO₄, da diese Absorber über einen sehr breiten, nahezu den gesamten Bereich des IR-Spektrums, wie es beispielsweise in der Sonnenstrahlung enthalten ist, eine hohe Absorption aufweisen und somit die Erwärmung durch Strahlung aus im Wesentlichen dem gesamten IR-Bereich verhindern.

c) Erfindungsgemäß vorteilhaft ist auch die Verwendung des erfindungsgemäßen Absorbers zur Herstellung von Preforms, welche für eine Weiterverarbeitung zu Endprodukten, vorzugsweise zu Behältern, besonders bevorzugt zu Lebensmittelbehältern oder Flaschen, in einem thermischen Umformungsverfahren, vorzugsweise in einem Streckverfahren oder Streckblasverfahren, vorgesehen und ausgelegt sind, wobei das Trägermaterial thermoplastisches Polymer, vorzugsweise transparentes thermoplastisches Polymer ist.

Thermische Polymerumformverfahren, wie beispielsweise Strecken oder Streckblasen, sind in den meisten Fällen komplexe und energieintensive Verfahren mit geringer Prozessflexibilität. Durch die erfindungsgemäße Verwendung von NIR-Absorbern in Polymerverarbeitungsprozessen können solche Verfahren flexibler und effizienter gestaltet werden. Durch die orts- und zeitgenaue Anwendbarkeit und Dosierbarkeit von IR-Strahlung kann die Verarbeitung jederzeit auf die jeweiligen Anforderungen und Bedürfnisse angepasst werden. Vorteilhaft ist in diesem Zusammenhang, dass die erfindungsgemäßen NIR-Absorber eine hohe Temperaturbeständigkeit aufweisen.

d) Erfindungsgemäß vorteilhaft ist auch die Verwendung des erfindungsgemäßen Absorbers zur Herstellung von Endprodukten aus thermoplastischem Polymer, welche in einem thermischen Umformungsverfahren, vorzugsweise in einem Streckverfahren oder Streckblasverfahren hergestellt werden;

Eine weitere bevorzugte Ausführungsform der Erfindung umfasst die Verwendung des Absorbers als Aufheizbeschleuniger und/oder Polymerisationsbeschleuniger und/oder Vernetzungsbeschleuniger in thermoplastischen oder duroplastischen Kunststoffen, Schmelzklebstoffen, Farben, Lacken oder Silikonen unter Bestrahlung mit elektromagnetischer Strahlung, vorzugsweise unter Bestrahlung mit Infrarotstrahlung bei wenigstens einer Wellenlänge im Bereich von 780 nm bis 1400 nm.

Da bei Trägermaterialien, welche den erfindungsgemäßen Absorber enthalten, der Strahlungsverlust durch Transmission oder Lichtstreuung kleiner ist als bei Materialien ohne erfindungsgemäßen Zusatz, kann bei gleicher Strahlungsleistung mit einer höheren Aufheizrate erwärmt werden und folglich die nötige Leistung des Strahlers und/oder die Strahlungsdauer signifikant erniedrigt werden. Die hohe Absorptionsrate kann auch dazu genutzt werden, chemische Polymerisationsreaktionen und/oder Vernetzungsreaktionen zu beschleunigen. Dies kann entweder durch die Temperaturerhöhung in Folge der erhöhten Strahlungsabsorption oder durch den Übertrag von Energie von IR-Absorber auf eine Komponente der chemischen Reaktion erfolgen.

Besonders bevorzugt ist der Einsatz von erfindungsgemäßen Absorbern in thermisch induzierten Polymerisations- oder Vernetzungsreaktionen, wie beispielsweise der radikalischen Polymerisation, sowie zur NIR-Härtung von Lacken, beispielsweise Klarlacken, die im Allgemeinen nur sehr schwach im NIR-Bereich absorbieren und daher nur langsam aushärten. Für solche Anwendungen ist der Einsatz von absorbierenden Zusätzen bekannt, jedoch sind diese Zusätze mit Nachteilen behaftet. Beispielsweise reflektiert TiO₂ im NIR-Bereich, wohingegen Ruß zwar eine starke Absorption aufweist, jedoch zu einer Farbverschiebung im sichtbaren Bereich des Lichts führt. Der Einsatz der erfindungsgemäßen Absorber ist daher insbesondere aufgrund der hohen Bandgeschwindigkeiten und einer geringen thermischen Belastung der Substrate im Aushärtungsprozess besonders vorteilhaft. Die Aushärtung von Lacken mit dem erfindungsgemäßen Absorber erfolgt in der Regel sehr viel schneller als ohne den Absorber, ohne dass nachteilige andere Zusätze verwendet werden müssen.

Die vorliegende Erfindung umfasst auch die Verwendung des erfindungsgemäßen Absorbers als Absorber für elektromagnetische Strahlung beim Lasermarkieren, Laserbeschriften, Laserschweißen und/oder Polymerfügen. Auch hier kommen in der Regel transparente oder eingefärbte thermoplastische oder duroplastische Polymere als Trägermaterialien zum Einsatz. Durch die Verwendung von Laser können in diesen Verfahren sehr eng begrenzte Bereiche bestrahlt und lokal erhitzt werden, sodass beim Lasermarkieren, Laserbeschriften, Laserschweißen sehr scharfe Konturen bzw. präzise Strukturen erzielt werden können.

In einer bevorzugten Ausführungsform wird der Absorber der erfindungsgemäßen Verwendung als Absorber für Infrarotstrahlung bei der Herstellung von elektrisch leitenden Metallstrukturen, vorzugsweise Leiterbahnstrukturen, auf einem nichtleitenden Trägermaterial (LDS-Verfahren) genutzt.

Die Erfindung wird nun anhand von Herstellungsbeispielen für erfindungsgemäße Absorber sowie von Beispielen erfindungsgemäßer Verwendungen und der angefügten Figuren weiter erläutert.
- Figur 1: zeigt das Röntgendiffraktogramm von erfindungsgemäß nach Herstellungsbeispiel 1 hergestelltem kristallwasserfreiem Fe₂P₂O₇.
- Figur 2: zeigt das Röntgendiffraktogramm von erfindungsgemäß nach Herstellungsbeispiel 2 hergestelltem Phasengemisch von kristallwasserfreiem Mg_{1,5}Fe_{1,5}(PO₄)₂ und Fe₃(PO₄)₂.
- Figur 3: zeigt das Röntgendiffraktogramm von erfindungsgemäß nach Herstellungsbeispiel 3 hergestelltem kristallwasserfreiem Fe₃(PO₄)₂.
- Figur 4: zeigt das Röntgendiffraktogramm von erfindungsgemäß nach Herstellungsbeispiel 4 hergestelltem kristallwasserfreiem KFe(PO₄).
- Figur 5: zeigt das Röntgendiffraktogramm von erfindungsgemäß nach Herstellungsbeispiel 5 hergestelltem kristallwasserfreiem KFe_{0,90}Zn_{0,10}(PO₄).
- Figur 6: zeigt das Röntgendiffraktogramm von erfindungsgemäß nach Herstellungsbeispiel 6 hergestelltem kristallwasserfreiem KFe_{0,75}Zn_{0,25}(PO₄).
- Figur 7: zeigt das Röntgendiffraktogramm von erfindungsgemäß nach Herstellungsbeispiel 7 hergestelltem kristallwasserfreiem KFe_{0,75}Mn_{0,25}(PO₄).
- Figur 8: zeigt das Röntgendiffraktogramm von erfindungsgemäß nach Herstellungsbeispiel 8 hergestelltem kristallwasserfreiem BaFeP₂O₇.

### BEISPIELE

### Röntgendiffraktometrie (XRD)

Von den gemäß den nachfolgenden Beispielen hergestellten Produkten wurden Röntgenbeugungsmessungen (XRD) an einem Diffraktometer des Typs D8 Advance A25 (Firma Bruker) unter Verwendung von CuKα-Strahlung durchgeführt.

Die Produkte und deren Kristallstrukturen wurden anhand entsprechender Referenzdiffraktogramme (Powder Diffraction Files; PDF) der Datenbank des ICDD (International Centre for Diffraction Data), vormals JCPDS (Joint Committee on Powder Diffraction Standards) identifiziert. Sofern für die hergestellten Produkte keine PDF-Karten zur Verfügung standen, wurden PDF-Karten isotyper Verbindungen (= Verbindungen vom gleichen Strukturtyp) verwendet.

### Elementaranalyse

Zur Ermittlung und Bestätigung der Stöchiometrien der hergestellten Produkte wurden Elementaranalysen mittels Röntgenfluoreszenzanalyse (XRF) unter Verwendung des Spektrometers Axios FAST (Firma PANalytical) durchgeführt.

### Herstellungsbeispiel 1 - kristallwasserfreies Fe₂P₂O₇

Eine Suspension aus
i) 35,5 kg Eisen(III)-Oxidhydroxid [FeO(OH) bzw. Fe₂O₃ 1H₂O],
ii) 16,5 kg 98%iger Phosphonsäure [H₃PO₃],
iii) 26,5 kg 75%iger Phosphorsäure [H₃PO₄] und

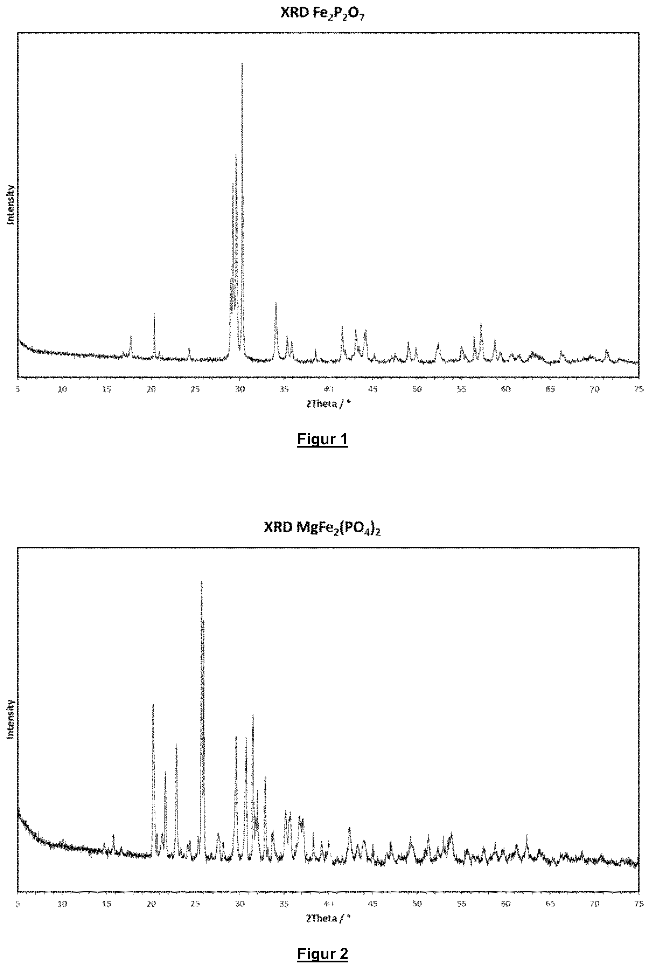

LM: 220 kg Wasser
wurde sprühgranuliert. Das so erhaltene Granulat wurde in einem Drehrohrofen bei einer mittleren Verweilzeit von 4 h unter Formiergasatmosphäre (5 Vol-% H₂ in N₂) bei 700°C temperaturbehandelt. Man erhielt ein fast farbloses bis zart rosafarbenes Produkt. Das Röntgendiffraktogramm (XRD) des Produkts ist in Figur 1 gezeigt. Das Produkt wurde anhand der PDF-Karte 01-072-1516 identifiziert.

### Herstellungsbeispiel 2 - Phasengemisch aus kristallwasserfreiem Mg_{1,5}Fe_{1,5}(PO₄)₂ und Fe₃(PO₄)₂

Eine Suspension aus
i) 8,45 kg Eisen(III)-Oxidhydroxid [FeO(OH) bzw. Fe₂O₃ 1H₂O],
ii) 7,95 kg 98%iger Phosphonsäure [H₃PO₃],
iii) 19,6 kg Eisen(III)-Phosphat-Dihydrat [FePO₄ 2H₂O],
iv) 8,43 kg Magnesiumcarbonat [MgCO₃] und

LM: 160 kg Wasser
wurde sprühgranuliert. Das so erhaltene Granulat wurde in einem Drehrohrofen bei einer mittleren Verweilzeit von 3 h unter Formiergasatmosphäre (5 Vol-% H₂ in N₂) bei 750°C temperaturbehandelt. Man erhielt ein fast farbloses Produkt. Das Röntgendiffraktogramm (XRD) des Produkts ist in Figur 2 gezeigt. Das Produkt wurde als anhand der PDF-Karten als ein Phasengemisch aus einer Hauptphase Mg_{1,5}Fe_{1,5}(PO₄)₂ (PDF-Karte 01-071-6793) und einer Nebenphase Fe₃(PO₄)₂ (PDF-Karte 00-49-1087) identifiziert.

### Herstellungsbeispiel 3 - kristallwasserfreies Fe₃(PO₄)₂

Eine Suspension aus
i) 21,75 kg Eisen(III)-Oxidhydroxid [FeO(OH) bzw. Fe₂O₃ 1H₂O],
ii) 12,15 kg 98%iger Phosphonsäure [H₃PO₃],
iii) 10,3 kg Eisen(III)-Phosphat-Dihydrat [FePO₄ 2H₂O] und

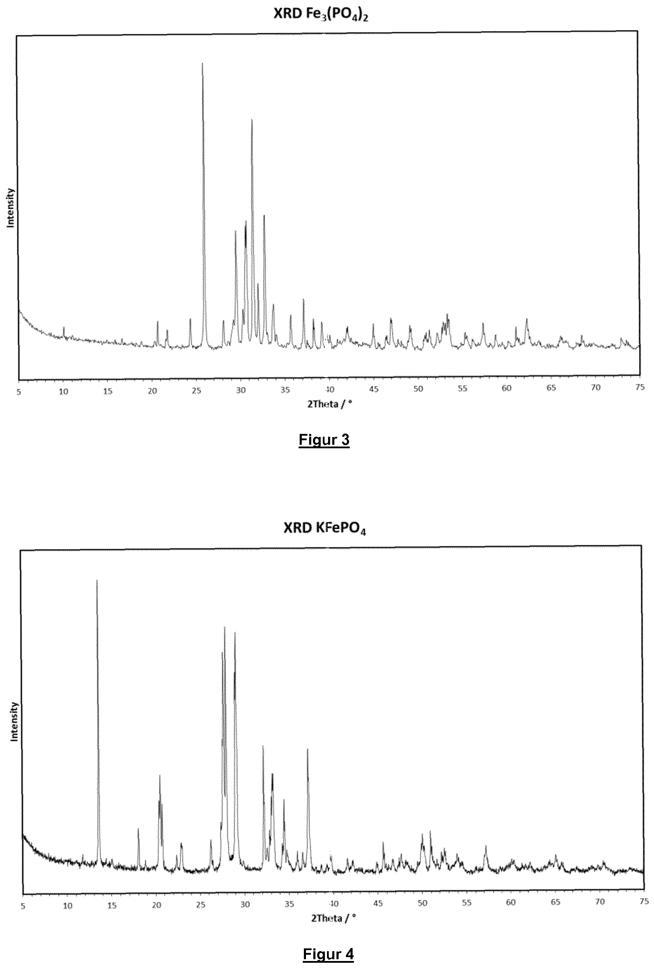

LM: 140 kg Wasser
wurde sprühgranuliert. Das so erhaltene Granulat wurde in einem Drehrohrofen bei einer mittleren Verweilzeit von 90 Minuten unter Formiergasatmosphäre (5 Vol-% H₂ in N₂) bei 750°C temperaturbehandelt. Man erhielt ein fast farbloses Produkt. Das Röntgendiffraktogramm (XRD) des Produkts ist in Figur 3 gezeigt. Das Produkt kristallisiert in der Graftonit-Struktur und wurde anhand der PDF-Karte 00-49-1087 identifiziert. Das Produkt wurde derart vermahlen, dass 50 Gew.-% des Produkts eine Teilchengröße von weniger als 3 µm hatten.

### Herstellungsbeispiel 4 - Herstellung von kristallwasserfreies KFe(PO₄)

Eine Suspension aus
i) 11,80 kg Eisen(III)-Oxidhydroxid [FeO(OH) bzw. Fe₂O₃ 1H₂O],
ii) 10,70 kg 98%iger Phosphonsäure [H₃PO₃],
iii) 24,8 kg Eisen(III)-Phosphat-Dihydrat [FePO₄ 2H₂O]
IV) 29,8 kg 50%iger Kalilauge [KOH]
V) 1,0 kg 75%iger Phosphorsäure [H₃PO₄] und
LM: 110 kg Wasser
wurde sprühgranuliert. Das so erhaltene Granulat wurde in einem Drehrohrofen bei einer mittleren Verweilzeit von 3 h unter Formiergasatmosphäre (5 Vol-% H₂ in N₂) bei 650°C temperaturbehandelt. Man erhielt ein blass hellgrünes Produkt. Das Röntgendiffraktogramm (XRD) des Produkts ist in Figur 4 gezeigt. Das Produkt wurde anhand der PDF-Karte 01-076-4615 identifiziert.

### Herstellungsbeispiel 5 - kristallwasserfreies KFe_{0,90}Zn_{0,10}(PO₄)

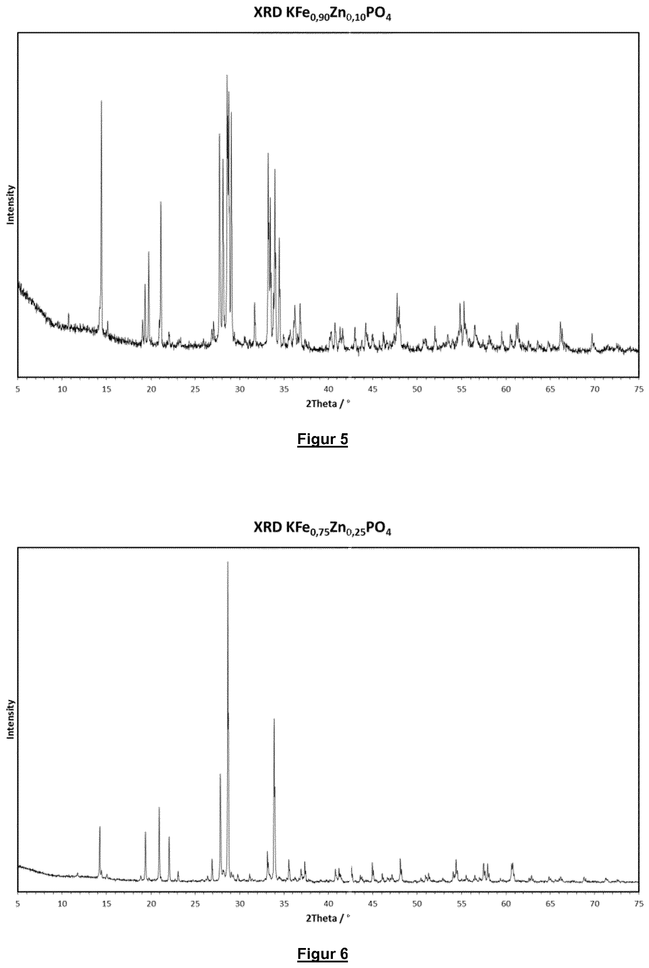

Eine Suspension aus
i) 10,60 kg Eisen(III)-Oxidhydroxid [FeO(OH) bzw. Fe₂O₃ 1H₂O],
ii) 9,65 kg 98%iger Phosphonsäure [H₃PO₃],
iii) 22,30 kg Eisen(III)-Phosphat-Dihydrat [FePO₄ 2H₂O]
IV) 2,15 kg Zinkoxid [ZnO]
IV) 29,8 kg 50%iger Kalilauge [KOH]
V) 4,15 kg 75%iger Phosphorsäure [H₃PO₄] und
LM: 120 kg Wasser
wurde sprühgranuliert. Das so erhaltene Granulat wurde in einem Drehrohrofen bei einer mittleren Verweilzeit von 2 h unter Formiergasatmosphäre (5 Vol-% H₂ in N₂) bei 600°C temperaturbehandelt. Man erhielt ein hellgraues Produkt. Das Röntgendiffraktogramm (XRD) des Produkts ist in Figur 5 gezeigt. Bei dem Produkt handelt es sich um einen neuen Strukturtyp, der mit der KFe(PO₄)-Struktur gemäß PDF-Karte 01-076-4615 eng verwandt zu sein scheint.

### Herstellungsbeispiel 6 - kristallwasserfreies KFe_{0,75}Zn_{0,25}(PO₄)

Eine Suspension aus
i) 8,85 kg Eisen(III)-Oxidhydroxid [FeO(OH) bzw. Fe₂O₃ 1H₂O],
ii) 8,05 kg 98%iger Phosphonsäure [H₃PO₃],
iii) 18,60 kg Eisen(III)-Phosphat-Dihydrat [FePO₄ 2H₂O]
IV) 5,40 kg Zinkoxid [ZnO]
IV) 29,8 kg 50%iger Kalilauge [KOH]
V) 9,30 kg 75%iger Phosphorsäure [H₃PO₄] und
LM: 120 kg Wasser
wurde sprühgranuliert. Das so erhaltene Granulat wurde in einem Drehrohrofen bei einer mittleren Verweilzeit von 2 h unter Formiergasatmosphäre (5 Vol-% H₂ in N₂) bei 600°C temperaturbehandelt. Man erhielt ein hellgraues Produkt. Das Röntgendiffraktogramm (XRD) des Produkts ist in Figur 6 gezeigt. Das Produkt ist nicht aus der Literatur bekannt. Es kristallisiert isotyp zu KZn(PO₄) gemäß PDF-Karte 01-081-1034.

### Herstellungsbeispiel 7 - kristallwasserfreies KFe_{0,75}Mn_{0,25}(PO₄)

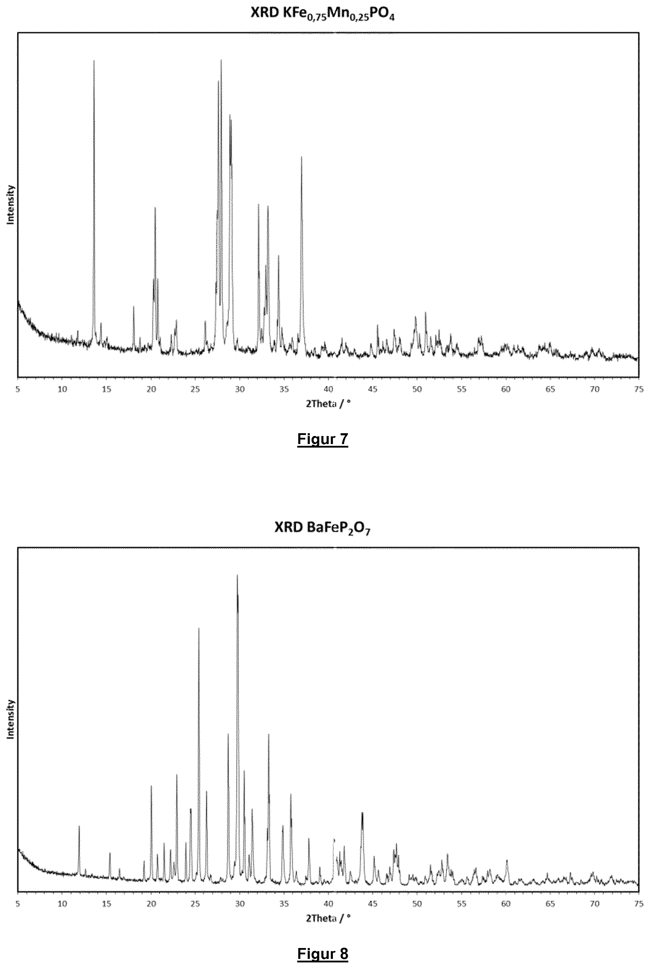

Eine Suspension aus
i) 8,85 kg Eisen(III)-Oxidhydroxid [FeO(OH) bzw. Fe₂O₃ 1H₂O],
ii) 8,05 kg 98%iger Phosphonsäure [H₃PO₃],
iii) 18,60 kg Eisen(III)-Phosphat-Dihydrat [FePO₄ 2H₂O]
IV) 8,85 kg Mangancarbonat-Hydrat [MnCO₃ H₂O]
IV) 29,8 kg 50%iger Kalilauge [KOH]
V) 9,30 kg 75%iger Phosphorsäure [H₃PO₄] und
LM: 140 kg Wasser
wurde sprühgranuliert. Das so erhaltene Granulat wurde in einem Drehrohrofen bei einer mittleren Verweilzeit von 2 h unter Formiergasatmosphäre (5 Vol-% H₂ in N₂) bei 600°C temperaturbehandelt. Man erhielt ein hellgraues Produkt. Das Röntgendiffraktogramm (XRD) des Produkts ist in Figur 7 gezeigt. Das Produkt ist nicht aus der Literatur bekannt. Es kristallisiert isotyp zu KFe(PO₄) gemäß PDF-Karte 01-076-4615.

### Herstellungsbeispiel 8 - kristallwasserfreies BaFeP₂O₇

Eine Suspension aus
i) 8,70 kg Eisen(III)-Oxidhydroxid [FeO(OH) bzw. Fe₂O₃ 1H₂O],
ii) 8,20 kg 98%iger Phosphonsäure [H₃PO₃],
iii) 19,05 kg Eisen(III)-Phosphat-Dihydrat [FePO₄ 2H₂O]
IV) 63,09 kg Bariumhydroxid-Oktahydrat [Ba(OH)₂ 8H₂O]
V) 26,15 kg 75%iger Phosphorsäure [H₃PO₄] und
LM: 250 kg Wasser
wurde sprühgranuliert. Das so erhaltene Granulat wurde in einem Drehrohrofen bei einer mittleren Verweilzeit von 4 h unter Formiergasatmosphäre (5 Vol-% H₂ in N₂) bei 800°C temperaturbehandelt. Man erhielt ein hellgraues Produkt. Das Röntgendiffraktogramm (XRD) des Produkts ist in Figur 8 gezeigt. Das Produkt kristallisiert isotyp zu BaCoP₂O₇ gemäß PDF-Karte 01-084-1833.

### Verwendungsbeispiel 1 (Laserschweißen)

2 Gew.-% des Absorbers Fe₃(PO₄)₂ gemäß Herstellungsbeispiel 3 wurden mittels eines Extruders (Typ ZSK18 der Firma Coperion GmbH) gleichmäßig in ein Polyethylen (Lupolen 1800S der Firma BASF) verteilt. Anschließend wurden aus dem Extrudat Platten der Größe 3 cm x 4 cm x 3 mm hergestellt. Des Weiteren wurde eine Platte mit den gleichen Maßen, jedoch ohne Zusatz des Absorbers hergestellt. Die Platte ohne den Absorber wurde über die Platte mit dem Absorber gelegt, und die Platten wurden anschließend mittels eines NdYAG-Lasers mit einer Wellenlänge von 1064nm verschweißt.

### Verwendungsbeispiel 2 (LDS)

Erfindungsgemäßes Absorbermaterial Eisen-II-Magnesiumphosphat, ein Phasengemisch aus Mg_{1,5}Fe_{1,5}(PO₄)₂ und Fe₃(PO₄)₂ gemäß Herstellungsbeispiel 2, wurde mit 1 Gew.-% Natriumdihydrogenpyrophosphat trocken gemischt. Anschließend wurden 5 Gew.-% des Gemisches mittels eines Extruders (Typ ZSK18 der Firma Coperion GmbH) in ein Polyamid 6,6 (Ultramid^{™} der Firma BASF) eingearbeitet und ein Granulat hergestellt. Das Granulat wurde weiter zu Platten der Größe 3 cm x 4 cm x 3 mm verarbeitet. Die Platten wurden mit einem Nd:YAG-Laser (Fa. Trumpf) mit einer Wellenlänge von 1064 nm bestrahlt und AntennenStrukturen erzeugt, welche dann zum Empfang von elektromagnetischer Strahlung eingesetzt werden konnten.

### Verwendungsbeispiel 3 (Aufheizrate)

5 Gew.-% des erfindungsgemäßen Absorbers K(Fe_{0,75}Zn_{0,25})PO₄ gemäß Herstellungsbeispiel 6 wurden mittels eines Extruders (Typ ZSK18 der Firma Coperion GmbH) gleichmäßig in ein Polypropylen (HE125MO der Firma Borealis) verteilt. Aus dem Extrudat wurden Platten der Größe 3 cm x 4 cm x 3 mm hergestellt, die anschließend mit einer handelsüblichen IR-Lampe (Rotlichtlampe) bestrahlt wurden. Zu Vergleichszwecken wurde der gleiche Polymerkörper, jedoch ohne den Absorberzusatz, in der gleichen Weise bestrahlt. Während der Bestrahlung wurde die Temperatur der Körper über die Zeit erfasst. Bei dem Polymerkörper mit dem Zusatz des erfindungsgemäßen Absorbers wurde eine Temperatur von 77 °C nach 1 min erreicht, wogegen bei dem Polymerkörper ohne den Zusatz des Absorbers die Temperatur von 77 °C erst nach 5 min Bestrahlung erreicht wurde. Die Temperaturaufnahmekurve des Polymerkörpers mit dem Zusatz des erfindungsgemäßen Absorbers weist nahezu über die gesamte Zeitskala eine doppelt so schnelle Aufheizrate auf wie die Temperaturaufnahmekurve des Polymerkörpers ohne den Zusatz des Absorbers.

### Verwendungsbeispiel 4 (Laserbeschriftung/Lasermarkierung)

2 Gew.-% des erfindungsgemäßen Absorbers KFe(PO₄) gemäß Herstellungsbeispiel 4 wurden mittels eines Extruders (Typ ZSK18 der Firma Coperion GmbH) gleichmäßig in ein Polyethylen (Lupolen 1800S der Firma BASF) eingearbeitet. Anschließend wurden aus dem Extrudat Platten der Größe 3 cm x 4 cm x 3 mm hergestellt. Anschließend wurden auf der der Oberfläche der Platten durch Bestrahlung mit einem Nd:YAG-Laser mit einer Wellenlänge von 1064 nm Markierungen erstellt. Zu Vergleichszwecken wurden gleiche Polymerplatten, jedoch ohne den Absorberzusatz, in der gleichen Weise lasermarkiert. Bei den Polymerplatten mit erfindungsgemäßem Absorber waren die Markierungen bereits bei einer Leistung des Lasers von 1 Watt und einer Frequenz von 6000 Hz eine deutlich sichtbar. Bei der bestrahlten Referenzplatte ohne Absorber zeigten sich unter gleichen Bedingungen keine sichtbaren Markierungen.

### Verwendungsbeispiel 5 (Aufheizen von Preforms mittels IR-Strahlung)

Aus einem Master-Batch aus Polyethylenterephthalat (PET) mit 500 ppm K(Fe_{0,75}Zn_{0,25})PO₄ gemäß Herstellungsbeispiel 6 wurden Preforms hergestellt, wie sie für die Herstellung von Getränkeflaschen verwendet werden. Zu Vergleichszwecken wurden gleiche Preforms, jedoch ohne den Absorberzusatz, hergestellt. Die Preforms wurden mittels IR-Halogenstrahlern bis zum Glasübergangspunkt des Polymers erhitzt. Bei den Preforms mit Absorberzusatz war die erforderliche Aufheizenergie etwa 15 % geringer und die erforderliche Bestrahlungsdauer etwa 20% kürzer als bei den Preforms ohne Absorberzusatz.

### Verwendungsbeispiel 6 (Vernetzung von Silikon)

Eine nicht vernetzte Silikonmasse wurde mit 0,05 Gew.-% kristallwasserfreiem Fe₃(PO₄)₂ mit Graftonit-Kristallstruktur gemäß Herstellungsbeispiel 3 gemischt und anschließend mit einem handelsüblichen Peroxid-Vernetzer versetzt, Anschließend wurde die Silikonmasse unter Verwendung eines VCSEL-Lasers (Firma Phillips) großflächig mittels Laserlicht der Wellenlänge 980 nm erhitzt. Zu Vergleichszwecken wurde die gleiche Silikonmasse ohne Absorber in gleicher Weise behandelt. Die Vernetzung des mit dem erfindungsgemäßen Absorber versetzten Silikons war bereits nach 110 Sekunden, die Vernetzung des Silikons ohne Absorber dauerte hingegen 120 Sekunden. Durch den Zusatz geringer Menge an erfindungsgemäßem Absorber konnte somit die für die Vernetzung erforderliche Energieaufnahme und damit die Vernetzungszeit reduziert werden.

### Verwendungsbeispiel 7 (Laserschweißen)

4 Gew.-% kristallwasserfreies Fe₃(PO₄)₂ mit Graftonit-Kristallstruktur gemäß Herstellungsbeispiel 3 wurden mittels eines Extruders (Typ ZSK18 der Firma Coperion GmbH) gleichmäßig in ein Polyamid 6,6 (Ultramid^{™} der Firma BASF) eingearbeitet und daraus ein Formteil für die Automobilindustrie hergestellt, welches als Rückleuchte in PKW Verwendung findet, hergestellt. Ein weiteres Bauteil, welches mit dem vorgenannten Bauteil zu verbinden (verschweißen) ist, wurde aus dem gleichen Material, jedoch ohne Absorber hergestellt. Anschließend wurden die beiden Bauteile mittels eines handelsüblichen Diodenlasers mit einer Wellenlänge von 940 nm verschweißt. Zu Vergleichszwecken wurde versucht, entsprechende Bauteile, die beide keinen Absorber enthielten, auf die gleiche Weise zu verschweißen, was nicht zerstörungsfrei möglich war.

## Patentansprüche

1. Verwendung von
- kristallwasserfreiem Eisen(II)-Orthophosphat der allgemeinen Formel Fe₃(PO₄)₂ oder
- kristallwasserfreiem Eisen(II)-Metall-Orthophosphat, Eisen(II)-Metall-Phosphonat, Eisen(II)-Metall-Pyrophosphat oder Eisen(II)-Metall-Metaphosphat der allgemeinen Formel FeₐMet_{b}(PO_{c})_{d}, worin a eine Zahl von 1 bis 5 ist, b eine Zahl von >0 bis 5 ist, c eine Zahl von 2,5 bis 5 ist, d eine Zahl von 0,5 bis 3 ist und wobei Met ein oder mehrere Metalle repräsentiert, ausgewählt aus der Gruppe, bestehend aus K, Mg, Ca, Sr, Ba, Sc, Y, La, Ti, Zr, Hf, Nb, Ta, Mo, W, Mn, Cu, Zn, Ni, B, Al, Ga, In, Si, Sn, Sb, Bi, und den Lanthanoiden, oder Kombinationen der vorgenannten Phosphate
als Absorber für elektromagnetische Strahlung, wobei der Absorber in einem Trägermaterial fein verteilt oder gelöst wird und
das Trägermaterial aus der Gruppe ausgewählt ist, bestehend aus thermoplastischen und duroplastischen Polymeren, oxidischen Keramiken, nicht-oxidischen Keramiken, Gläsern, Schmelzklebstoffen, Farben, Lacken, Silikonen, Pappen, Papieren, Pulpen und Cellulosen, wobei der Absorber in dem Trägermaterial in einer Konzentration von 100 ppm bis 20 Gew.-% fein verteilt oder gelöst vorliegt, bezogen auf das Gesamtgewicht des Trägermaterials mit gegebenenfalls enthaltenen Zuschlagstoffen einschließlich des Absorbers.

2. Verwendung nach einem der vorausgehenden Ansprüche, **dadurch gekennzeichnet, dass** das Trägermaterial ein thermoplastisches Polymer ist, welches aus der Gruppe ausgewählt ist, bestehend aus Polyvinylbutyral (PVB), Polypropylen (PP), Polyethylen (PE), Polyamid (PA), Polyester wie Polybutylenterephthalat (PBT), Polyethylenterephthalat (PET), Polyphenylenoxid, Polyacetal, Polymethacrylat, Polyoxymethylen, Polyvinylacetal, Polystyrol, Acryl-Butadien-Styrol (ABS), Acrylnitril-Styrol-Acrylester (ASA), Polycarbonat, Polyethersulfon, Polysulfonat, Polytetrafluoroethylen, Polyharnstoff, Formaldehydharze, Melaminharze, Polyetherketon, Polyvinylchlorid, Polylactid, Polysiloxan, Phenolharze, Epoxidharze, Poly(imid), Bismaleimid-Triazin, thermoplastischem Polyurethan Copolymeren und/oder Mischungen der vorgenannten Polymere.

3. Verwendung nach einem der vorausgehenden Ansprüche, **dadurch gekennzeichnet, dass** der Absorber eine mittlere Korngröße (d50-Wert) im Bereich von 0,01 µm bis 50 µm, vorzugsweise von 0,1 bis 20 µm, besonders bevorzugt von 1 µm bis 10 µm aufweist.

4. Verwendung nach einem der vorausgehenden Ansprüche, **dadurch gekennzeichnet, dass** der Absorber kristallwasserfreies Eisen(II)-Orthophosphat der allgemeinen Formel Fe₃(PO₄)₂ ist und die Graftonit-Kristallstruktur aufweist.

5. Verwendung des Absorbers nach einem der vorausgehenden Ansprüche zur Herstellung von Produkten, welche aus dem Trägermaterial bestehen oder dieses umfassen, wobei das Trägermaterial den Absorber in einer Menge enthält, sodass es Infrarotstrahlung bei wenigstens einer Wellenlänge im Bereich von 780 nm bis 1400 nm stärker absorbiert als das gleiche Polymer ohne darin enthaltenen Absorber, und wobei die Produkte aus der Gruppe ausgewählt sind, bestehend aus:
- Verpackungsmaterial für Handelsprodukte, wobei das Trägermaterial thermoplastisches Polymer oder duroplastisches Polymer ist, vorzugsweise transparentes thermoplastisches Polymer oder duroplastisches Polymer;
- Fensterscheiben, wobei das Trägermaterial transparentes thermoplastisches Polymer, transparentes duroplastisches Polymer oder Glas ist;
- Preforms, welche für eine Weiterverarbeitung zu Endprodukten, vorzugsweise zu Behältern, besonders bevorzugt zu Lebensmittelbehältern oder Flaschen, in einem thermischen Umformungsverfahren, vorzugsweise in einem Streckverfahren oder Streckblasverfahren, vorgesehen und ausgelegt sind, wobei das Trägermaterial thermoplastisches Polymer, vorzugsweise transparentes thermoplastisches Polymer ist;
- Endprodukten aus thermoplastischem Polymer, welche in einem thermischen Umformungsverfahren, vorzugsweise in einem Streckverfahren oder Streckblasverfahren hergestellt werden.

6. Verwendung des Absorbers nach einem der vorausgehenden Ansprüche als Aufheizbeschleuniger und/oder Polymerisationsbeschleuniger und/oder Vernetzungsbeschleuniger in thermoplastischen oder duroplastischen Kunststoffen, Schmelzklebstoffen, Farben, Lacken oder Silikonen unter Bestrahlung mit elektromagnetischer Strahlung, vorzugsweise unter Bestrahlung mit Infrarotstrahlung bei wenigstens einer Wellenlänge im Bereich von 780 nm bis 1400 nm.

7. Verwendung des Absorbers nach einem der vorausgehenden Ansprüche als Absorber für elektromagnetische Strahlung beim Lasermarkieren, Laserbeschriften, Laserschweißen und/oder Polymerfügen.

8. Verwendung des Absorbers nach einem der vorausgehenden Ansprüche als Absorber für Infrarotstrahlung bei der Herstellung von elektrisch leitenden Metallstrukturen, vorzugsweise von Leiterbahnstrukturen oder Antennenstrukturen mittels Laserlicht auf einem nichtleitenden Trägermaterial (LDS-Verfahren).

9. Verwendung nach einem der vorausgehenden Ansprüche, **dadurch gekennzeichnet, dass** das Absorptionsmaximum des Absorbers bei einer Wellenlänge im Bereich von 200 nm bis 12.000 nm, bevorzugt 700 nm bis 1.500 nm, besonders bevorzugt 900 nm bis 1.200 nm, liegt, wobei die absorbierte Strahlung, Laserstrahlung als auch Nicht-Laserstrahlung umfasst.

## Claims

1. Use of
- crystal water-free iron(II) orthophosphate of the general formula Fe₃(PO₄)₂ or
- crystal water-free iron(II) metal orthophosphate, iron(II) metal phosphonate, iron(II) metal pyrophosphate or iron(ll) metal metaphosphate of the general formula FeₐMet_{b}(PO_{c})_{d}, wherein a is a number from 1 to 5, b is a number from >0 to 5, c is a number from 2.5 to 5, d is a number from 0.5 to 3 and wherein Met represents one or more metals selected from the group consisting of K, Mg, Ca, Sr, Ba, Sc, Y, La, Ti, Zr, Hf, Nb, Ta, Mo, W, Mn, Cu, Zn, Ni, B, Al, Ga, In, Si, Sn, Sb, Bi, and the lanthanoids, or combinations of the aforementioned phosphates
as an absorber for electromagnetic radiation, wherein the absorber is finely dispersed or dissolved in a carrier material and
the carrier material is selected from the group consisting of thermoplastic and duroplastic polymers, oxidic ceramics, non-oxidic ceramics, glasses, hot-melt adhesives, dyes, varnishes, silicones, cardboards, papers, pulps and celluloses, wherein the absorber is present in the carrier material in a concentration of 100 ppm to 20% by weight finely dispersed or dissolved, based on the total weight of the carrier material with optionally contained additive including the absorber.

2. Use according to any one of the preceding claims, **characterized in that** the carrier material is a thermoplastic polymer, which is selected from the group consisting of polyvinyl butyral (PVB), polypropylene (PP), polyethylene (PE), polyamide (PA), polyesters such as polybutylene terephthalate (PBT), polyethylene terephthalate (PET), polyphenylene oxide, polyacetal, polymethacrylate, polyoxymethylene, polyvinyl acetal, polystyrene, acryl-butadiene-styrene (ABS), acrylonitrile-styrene-acrylate (ASA), polycarbonate, polyethersulfone, polysulfone, polytetrafluoroethylene, polyurea, formaldehyde resins, melamine resins, polyetherketone, polyvinyl chloride, polylactide, polysiloxane, phenol resins, epoxide resins, poly(imide), bismaleimide-triazine, thermoplastic polyurethane, copolymers and/or mixtures of the aforementioned polymers.

3. Use according to any one of the preceding claims, **characterized in that** the absorber has an average particle size (d50 value) in the range from 0.01 µm to 50 µm, preferably from 0.1 to 20 µm, particularly preferably from 1 µm to 10 µm.

4. Use according to any one of the preceding claims, **characterized in that** the absorber is crystal water-free iron(II) orthophosphate of the general formula Fe₃(PO₄)₂ and has the graftonite crystal structure.

5. Use of the absorber according to any one of the preceding claims for producing products, which consist of the carrier material or comprise it, wherein the carrier material contains the absorber in an amount such that it absorbs infrared radiation at at least one wavelength in the range from 780 nm to 1400 nm more strongly than the same polymer without absorber contained therein, and wherein the products are selected from the group consisting of:
- packaging material for commercial products, wherein the carrier material is thermoplastic polymer or duroplastic polymer, preferably transparent thermoplastic polymer or duroplastic polymer;
- window panes, wherein the carrier material is transparent thermoplastic polymer, transparent duroplastic polymer or glass;
- preforms, which are provided and designed for further processing into end products, preferably into containers, particularly preferably into food containers or bottles, in a thermal reshaping procedure, preferably in a stretching process or stretch blow molding process, wherein the carrier material is thermoplastic polymer, preferably transparent thermoplastic polymer;
- end products made of thermoplastic polymer, which are manufactured in a thermal reshaping procedure, preferably in a stretch process or stretch blow molding process.

6. Use of the absorber according to any one of the preceding claims as heating accelerator and/or polymerization accelerator and/or cross-linking accelerator in thermoplastic or duroplastic plastics, hot-melt adhesives, dyes, varnishes or silicones under irradiation with electromagnetic radiation, preferably under irradiation with infrared radiation at at least one wavelength in the range from 780 nm to 1400 nm.

7. Use of the absorber according to any one of the preceding claims as an absorber for electromagnetic radiation in laser marking, laser inscription, laser welding and/or polymer joining.

8. Use of the absorber according to any one of the preceding claims as an absorber for infrared radiation in the manufacture of electrically conductive metal structures, preferably of conductor track structures or antenna structures by means of laser light on a nonconductive carrier material (LDS process).

9. Use according to any one of the preceding claims, **characterized in that** the absorption maximum of the absorber is at a wavelength in the range from 200 nm to 12,000 nm, preferably 700 nm to 1,500 nm, particularly preferably 900 nm to 1,200 nm, wherein the absorbed radiation comprises laser radiation as well as non-laser radiation.

## Revendications

1. Utilisation de
- orthophosphate de fer(II) anhydre de formule générale Fe₃(PO₄)₂ ou
- d'orthophosphate de fer(II)-métal anhydre, de phosphonate de fer(II)-métal anhydre, de pyrophosphate de fer(II)-métal anhydre ou de métaphosphate de fer(II)-métal anhydre de formule générale FeₐMet_{b}(PO_{c})_{d}, dans lequelle a est un nombre de 1 à 5, b est un nombre de >0 à 5, c est un nombre de 2,5 à 5, d est un nombre de 0,5 à 3, et où Met représente un ou plusieurs métaux choisis dans le groupe constitué de K, Mg, Ca, Sr, Ba, Sc, Y, La, Ti, Zr, Hf, Nb, Ta, Mo, W, Mn, Cu, Zn, Ni, B, Al, Ga, In, Si, Sn, Sb, Bi, et les lanthanides, ou de combinaisons des phosphates précités
comme absorbeur de rayonnement électromagnétique, l'absorbeur étant finement réparti ou dissous dans un matériau support, et le matériau support étant choisi dans le groupe constitué des polymères thermoplastiques et thermodurcissables, des céramiques oxydiques, des céramiques non oxydiques, des verres, des adhésifs thermofusibles, des peintures, des laques, des silicones, des cartons, des papiers, des pâtes à papier et des celluloses, l'absorbeur étant finement réparti ou dissous dans le matériau support à une concentration de 100 ppm à 20 % en poids, rapportée au poids total du matériau support comprenant le cas échéant des additifs y compris l'absorbeur.

2. Utilisation selon l'une quelconque des revendications précédentes, **caractérisée en ce que** le matériau support est un polymère thermoplastique qui est choisi dans le groupe constitué du polyvinylbutyral (PVB), du polypropylène (PP), du polyéthylène (PE), du polyamide (PA), des polyesters tels que le polybutylènetéréphtalate (PBT), le polyéthylènetéréphtalate (PET), de l'oxyde de polyphénylène, du polyacétal, du polyméthacrylate, du polyoxyméthylène, du polyvinylacétal, du polystyrène, de l'acrylonitrile-butadiène-styrène (ABS), de l'acrylonitrile-styrène-acrylate (ASA), du polycarbonate, de la polyéthersulfone, du polysulfonate, du polytétrafluoroéthylène, du polyurée, des résines formaldéhyde, des résines mélamine, de la polyéthercétone, du polychlorure de vinyle, du polylactide, du polysiloxane, des résines phénoliques, des résines époxy, du poly(imide), du bismaléimide-triazine, du polyuréthane thermoplastique, de copolymères et/ou de mélanges des polymères précités.

3. Utilisation selon l'une quelconque des revendications précédentes, **caractérisée en ce que** l'absorbeur présente une taille moyenne de particules (valeur d₅₀) dans la plage de 0,01 µm à 50 µm, de préférence de 0,1 à 20 µm, de manière particulièrement préférée de 1 µm à 10 µm.

4. Utilisation selon l'une quelconque des revendications précédentes, **caractérisée en ce que** l'absorbeur est du phosphate de fer(II) anhydre de formule générale Fe₃(PO₄)₂ et présente la structure cristalline de la graftonite.

5. Utilisation de l'absorbeur selon l'une quelconque des revendications précédentes pour la fabrication de produits qui sont constitués du matériau support ou qui le comprennent, le matériau support contenant l'absorbeur en une quantité telle qu'il absorbe le rayonnement infrarouge à au moins une longueur d'onde dans la plage de 780 nm à 1400 nm plus fortement que le même polymère sans absorbeur contenu dans celui-ci, et les produits étant choisis dans le groupe constitué de :
- matériau d'emballage pour produits commerciaux, le matériau support étant un polymère thermoplastique ou un polymère thermodurcissable, de préférence un polymère thermoplastique transparent ou un polymère thermodurcissable transparent;
- vitres, le matériau support étant un polymère thermoplastique transparent, un polymère thermodurcissable transparent ou du verre;
- préformes qui sont prévues et conçues pour une transformation ultérieure en produits finis, de préférence en récipients, de manière particulièrement préférée en récipients alimentaires ou en bouteilles, dans un procédé de mise en forme thermique, de préférence dans un procédé d'étirage ou un procédé d'étirage-soufflage, le matériau support étant un polymère thermoplastique, de préférence un polymère thermoplastique transparent;
- produits finis en polymère thermoplastique qui sont fabriqués dans un procédé de mise en forme thermique, de préférence dans un procédé d'étirage ou un procédé d'étirage-soufflage.

6. Utilisation de l'absorbeur selon l'une quelconque des revendications précédentes comme accélérateur de chauffage et/ou accélérateur de polymérisation et/ou accélérateur de réticulation dans des matières plastiques thermoplastiques ou thermodurcissables, des adhésifs thermofusibles, des peintures, des laques ou des silicones sous irradiation par un rayonnement électromagnétique, de préférence sous irradiation par un rayonnement infrarouge à au moins une longueur d'onde dans la plage de 780 nm à 1400 nm.

7. Utilisation de l'absorbeur selon l'une quelconque des revendications précédentes comme absorbeur de rayonnement électromagnétique lors du marquage au laser, d'inscription laser, du soudage au laser et/ou de l'assemblage de polymères.

8. Utilisation de l'absorbeur selon l'une quelconque des revendications précédentes comme absorbeur de rayonnement infrarouge lors de la fabrication de structures métalliques électriquement conductrices, de préférence de structures de pistes conductrices ou de structures d'antennes au moyen d'une lumière laser sur un matériau support non conducteur (procédé LDS).

9. Utilisation selon l'une quelconque des revendications précédentes, **caractérisée en ce que** le maximum d'absorption de l'absorbeur se situe à une longueur d'onde dans la plage de 200 nm à 12 000 nm, de préférence de 700 nm à 1 500 nm, de manière particulièrement préférée de 900 nm à 1 200 nm, le rayonnement absorbé comprenant aussi bien un rayonnement laser qu'un rayonnement non laser.
